# FASCICULE DE BREVET EUROPEEN

(11) **EP 3 892 911 B1**
(45) Date de publication et mention de la délivrance du brevet: **07.06.2023**
(21) Numéro de dépôt: 21165753.1
(22) Date de dépôt: 30.03.2021
(51) Int. Cl.: F17C 5/06

(54) **DISPOSITIF ET PROCÉDÉ DE REMPLISSAGE DE RÉSERVOIRS DE GAZ SOUS PRESSION**
FÜLLVORRICHTUNG UND -VERFAHREN FÜR UNTER DRUCK STEHENDE GASTANKS
DEVICE AND METHOD FOR FILLING PRESSURISED GAS TANKS

(30) Priorité: 10.04.2020 FR 2003616
(43) Date de publication de la demande: 13.10.2021
(73) Titulaire: L'Air Liquide, société anonyme pour l'Étude et l'Exploitation des procédés Georges Claude, 75007 Paris (FR)
(72) Inventeur: ALLIDIERES, laurent, 75321 Paris (FR)
(74) Mandataire: Air Liquide

(56) Documents cités:
- EP-A1- 3 409 998
- US-A1- 2019 178 447

## Description

L'invention concerne un dispositif et procédé de remplissage de réservoirs de gaz sous pression. Un tel dispositif est connu de US 2019/178447 A1.

L'invention concerne plus particulièrement un dispositif de remplissage de réservoirs de gaz sous pression, en particulier de réservoirs d'hydrogène de véhicules, comprenant un circuit de transfert de fluide comprenant une extrémité amont munie d'une pluralité à une source de fluide sous pression et une extrémité aval comprenant au moins deux terminaisons de distribution destinées chacune à être raccordées à des réservoirs distincts à remplir, chaque source comprenant une première sortie de fluide raccordée à une première vanne de sortie respective, chaque première vanne de sortie étant raccordée à chacune des au moins deux terminaisons de distribution via des conduites de transfert parallèles, chacune des conduites de transfert comprenant au moins un vanne d'isolation respective, chacune des terminaisons de distribution (10, 11) étant reliée fluidiquement à chaque première vanne (12, 13, 14, 15) de sortie d'une source (2, 3, 4, 5) via un premier chemin fluidique direct passant par une seule conduite de transfert (22, 23, 24, 32, 33, 34) et via au moins un second chemin fluidique alternatif indirect passant successivement par plusieurs conduites de transfert (22, 23, 24, 32, 33, 34), le dispositif comprenant un contrôleur (16) électronique comprenant un organe de stockage et de traitement de données, au moins une partie des vannes du circuit étant des vannes du type pilotées et reliées au contrôleur (16) électronique,le contrôleur (16) électronique étant configuré pour commander l'ouverture ou la fermeture desdites vannes.

Les stations hydrogène permettent de remplir rapidement en gaz des réservoirs embarqués de véhicules à pile à combustible. Ces stations comprennent typiquement une source d'hydrogène, un compresseur (et/ou un système de stockage de gaz liquéfié et de pompage et de vaporisation) qui remplit des réservoirs tampon intermédiaires arrangés en parallèle. Les remplissages sont réalisés typiquement par des équilibrages successifs entre les réservoirs tampon de la station et le ou les réservoirs du véhicule (éventuellement suppléé et/ou complété et/ou initié par un remplissage par le compresseur). Le remplissage peut donc aussi être réalisé par compression directe du gaz dans le véhicule. Dans le cas de stations à forte capacité, il est alors intéressant d'ajouter une ou plusieurs terminaisons de remplissage supplémentaires, c'est-à-dire plusieurs extrémités de remplissage munies d'une buse destinée à être raccordée à l'entrée d'un réservoir à remplir (« dispenser » en anglais). En cas de défaillance d'une partie des composants de la station, une ou plusieurs terminaisons peuvent être rendues inutilisables. En effet, à chaque ajout de terminaison, afin d'assurer une distribution de gaz indépendant d'une terminaison à l'autre, il faut rajouter autant de vannes que de réservoirs tampon source. Toutes les vannes ont une fonction précise en fonctionnement normal. En cas de défaillance d'une vanne, toute ou partie de la station est arrêtée.

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est essentiellement caractérisé en ce que le contrôleur (16) électronique est configuré pour assurer un transfert de fluide entre une des sources (2, 3, 4, 5) et une terminaison (10, 11) de distribution selon le premier chemin fluidique direct passant par une seule conduite de transfert (22, 23, 24, 32, 33, 34) ou selon le second chemin indirect passant successivement par plusieurs conduites de transfert (22, 23, 24, 32, 33, 34) selon un état de fonctionnement d'au moins une desdites vannes.

L'invention permet d'augmenter la fiabilité des stations à plusieurs terminaisons sans rajouter d'équipement particulier. Par ailleurs, des modes de réalisation de l'invention peuvent comporter l'une ou plusieurs des caractéristiques suivantes :
- la pluralité de source(s) de fluide sous pression comprend plusieurs stockages de fluide sous pression,
- plusieurs desdits stockages de fluide sous pression comprennent une deuxième sortie de fluide raccordée à une deuxième vanne de sortie respective,
- chacune des deuxièmes vannes de sortie des stockages de fluide est reliée aux terminaisons de distribution via les conduites de transfert,
- la pluralité de source(s) de fluide sous pression comprend au moins un compresseur,
- la sortie du compresseur est raccordée en parallèle aux deuxièmes sorties de fluide des stockages de fluide et également aux conduites de transfert,
- chaque terminaison de distribution comprend une vanne d'isolation située en aval des conduites de transfert,
- le dispositif comprend un contrôleur électronique comprenant un organe de stockage et de traitement de données, au moins une partie des vannes du circuit étant des vannes du type pilotées et reliées au contrôleur électronique, le contrôleur électronique étant configuré pour commander l'ouverture ou la fermeture desdites vannes,
- le contrôleur électronique est configuré pour assurer un transfert de fluide entre une source et une terminaison de distribution selon le premier chemin fluidique direct passant par une seule conduite de transfert ou selon le second chemin indirect passant successivement par plusieurs conduites de transfert selon l'état de fonctionnement d'au moins une desdites vannes.

L'invention concerne également un procédé de remplissage d'un réservoir utilisant un dispositif de remplissage selon l'une quelconque des caractéristiques ci-dessus ou ci-dessous, le procédé comportant une étape de détection d'une défaillance de vanne du circuit et une étape de transfert de fluide via un chemin alternatif du circuit qui évite ladite vanne défaillante. Selon d'autres particularités possibles :
- en cas de détection de défaillance d'une vanne d'isolation d'une première conduite de transfert raccordée à une première terminaison de distribution, le procédé comporte une étape de transfert de de fluide d'une source vers ladite première terminaison de distribution en passant via un chemin alternatif indirect passant par des conduites de transfert raccordées à une autre terminaison de distribution puis via une seconde conduite de transfert raccordée à la première terminaison de distribution,
- les stockages de gaz sous pression comprennent une deuxième sortie de fluide raccordée à une deuxième vanne de sortie respective, lesdites deuxièmes vannes de sortie des stockages de fluide étant reliées aux terminaisons de distribution via les conduites de transfert parallèles, le procédé comprenant une étape de transfert de fluide sous pression d'un stockages de fluide sous pression vers une terminaison de distribution, et en cas de détection de défaillance de la première de sortie du stockage concerné, le procédé comportant une étape de transfert de fluide sous pression dudit stockages de fluide vers la terminaison de distribution via la deuxième sortie de fluide,
- la pluralité de source(s) de fluide sous pression comprend au moins un compresseur raccordé en parallèle aux deuxièmes sorties de fluide des stockages de fluide et aux conduites de transfert, le procédé comprenant une étape de remplissage d'un stockage de fluide par le compresseur, en cas de détection de défaillance de la première vanne de sortie dudit stockage, le procédé comprenant une étape de remplissage dudit stockage via la deuxième sortie de fluide.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
[Fig. 1] représente une vue schématique et partielle d'un exemple de structure et de fonctionnement d'un dispositif de remplissage selon l'invention,
[Fig. 2] représente le dispositif de remplissage dans une première configuration de fonctionnement,
[Fig. 3] représente le dispositif de remplissage dans une deuxième configuration de fonctionnement,
[Fig. 4] représente le dispositif de remplissage dans une troisième configuration de fonctionnement,
[Fig. 5] représente le dispositif de remplissage dans une quatrième configuration de fonctionnement,
[Fig. 6] représente le dispositif de remplissage dans une cinquième configuration de fonctionnement.

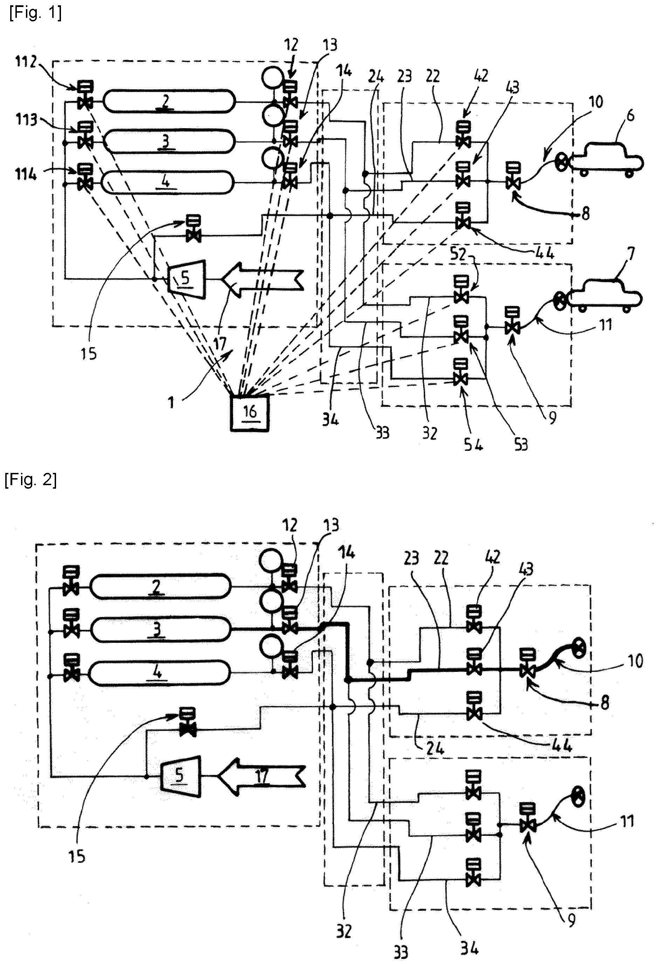

Le dispositif 1 de remplissage de réservoirs de gaz sous pression illustré à la [Fig. 1] est par exemple une station de remplissage de réservoirs d'hydrogène de véhicules 6, 7.

Le dispositif 1 comprend un circuit de transfert de fluide comprenant une extrémité amont munie d'une pluralité à une source 2, 3, 4, 5 de fluide sous pression et une extrémité aval comprenant au moins deux terminaisons 10, 11 de distribution destinées chacune à être raccordées à des réservoirs 6, 7 distincts à remplir.

Dans cet exemple non limitatif le dispositif 1 comprend trois stockage 2, 3, 4 tampon de gaz sous pression et un compresseur 5 (ou pompe). Le compresseur 5 peut être alimenté en fluide (gaz ou respectivement liquide) par une source 17 d'approvisionnement (réseau, électrolyseur, liquéfacteur, stockage...).

Chaque source 2, 3, 4, 5 comprend une première sortie de fluide raccordée à une première vanne de sortie 12, 13, 14, 15 respective.

Chaque première vanne 12, 13, 14, 15 de sortie est raccordée à chacune des au moins deux terminaisons 10, 11 de distribution via des conduites 22, 23, 24, 32, 33, 34 de transfert parallèles respective. Ainsi, par exemple, une première vanne 12 d'une première source 2 est reliée aux deux terminaisons 10, 11 via respectivement deux conduites 22, 32 de transfert distinctes et parallèles. De même pour les autres sources 13, 14, 15.

Chacune des conduites 22, 23, 24, 32, 33, 34 de transfert comprend de préférence au moins un vanne 42, 43, 44, 52, 53, 54 d'isolation respective.

De préférence, chaque terminaison 10, 11 de distribution comprend une vanne 8, 9 d'isolation située en aval des conduites 22, 23, 24, 32, 33, 34 de transfert (c'est-à-dire sur la portion de terminaison 10, 11 à laquelle se raccordent les conduites 22, 23, 24 ou 32, 33, 34 de transfert).

Chacune des terminaisons de distribution 10, 11 est reliée fluidiquement à chaque première vanne 12, 13, 14, 15 de sortie des sources 2, 3, 4, 5 via d'une part par un premier chemin fluidique direct passant par une seule conduite de transfert 22 ou 23 ou 24 ou 32 ou 33 ou 34 et, d'autre part, via au moins un second chemin fluidique alternatif indirect passant successivement par plusieurs conduites de transfert 22, 23, 24, 32, 33, 34. Par exemple le premier chemin fluidique direct passe par une seule conduite de transfert reliée directement à la terminaison concernée.

La [Fig. 2] représente ainsi un exemple de première configuration de fonctionnement dite normale dans laquelle un stockage 3 tampon alimente directement une première terminaison via la première vanne 13 et la conduite de transfert 23 concernée.

Le second chemin fluidique alternatif indirect passe en revanche successivement par plusieurs conduites de transfert dont au moins une conduite de transfert reliée directement à une autre terminaison.

Comme décrit plus en détail ultérieurement, cette architecture permet d'utiliser des vannes pour remplir la fonction d'une autre vanne défaillante.

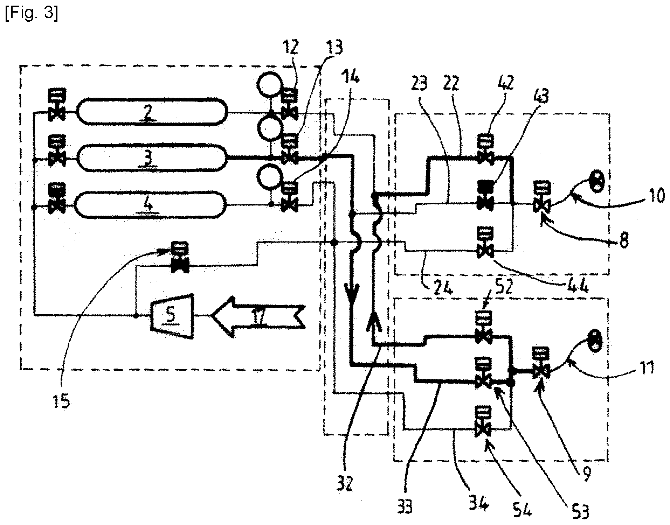

C'est-à-dire que, si une vanne est défaillante, le dispositif 1 peut se mettre ou être disposé en mode de remplissage dégradé en utilisant les vannes d'une autre voie du circuit afin de palier à la défaillance de la vanne concernée. Ainsi, par exemple, si un terminal n'est plus disponible au remplissage, la station peut tout de même continuer à être utilisée pour fournir du gaz. La [Fig. 3] représente une première configuration de fonctionnement dans laquelle la vanne d'isolation 43 utilisée dans la première configuration de la [Fig. 2] est en panne (représentée en noir). Dans ce cas le second chemin fluidique passe par une première conduite de transfert 33 puis une seconde conduite de transfert 32 de l'autre terminaison pour ensuite passer par une autre conduite de transfert 22 de la terminaison 10 à alimenter (vannes d'isolation 52, 53 et 43 correspondantes ouvertes).

Comme illustré, les stockages 2, 3, 4 de fluide sous pression comprennent de préférence chacun une deuxième entrée/sortie de fluide raccordée à une deuxième vanne de sortie 112, 113, 114, respective. Chacune des deuxièmes vannes de sortie 112, 113, 114 des stockages 2, 3, 4 de fluide peut être reliée aux terminaisons 10, 11 de distribution via au moins des mêmes conduites 22, 23, 24, 32, 33, 34 de transfert.

De même, la sortie du compresseur 5 peut être raccordée aux premières et deuxièmes sorties de fluide des stockages 2, 3, 4 de fluide et également à au moins une conduites 22, 23, 24, 32, 33, 34 de transfert de chaque terminaison 10, 11.

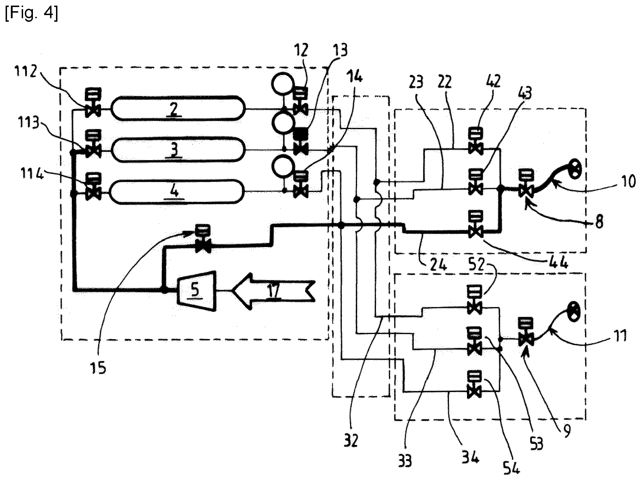

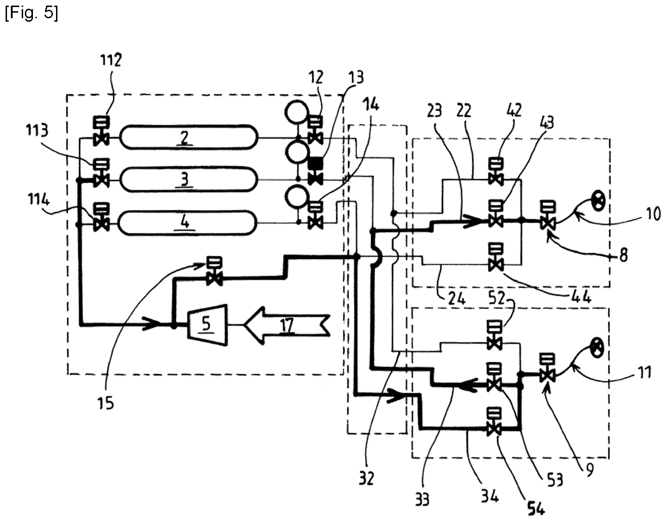

Comme illustré à la [Fig. 4] et à la [Fig. 5], si la première vanne de sortie 13 d'un stockage 3 tampon est en panne (représentée en noir), le transfert de fluide dudit stockage 3 vers une terminaison 10 peut être réalisé via l'ouverture de la deuxième vannes de sortie 113 correspondante et via un trajet direct via une conduite 24 de transfert ([Fig. 4]) et/ou via un trajet indirect via une deux conduites 33, 34 de transfert de l'autre terminaison 11 puis une conduites 23 de transfert de la terminaison considérée ([Fig. 5]).

Bien entendu, le trajet indirect pourrait passer par deux conduites 33, 34 de transfert de l'autre terminaison 11 puis une conduites 23 de transfert de la terminaison considérée ([Fig. 5]).

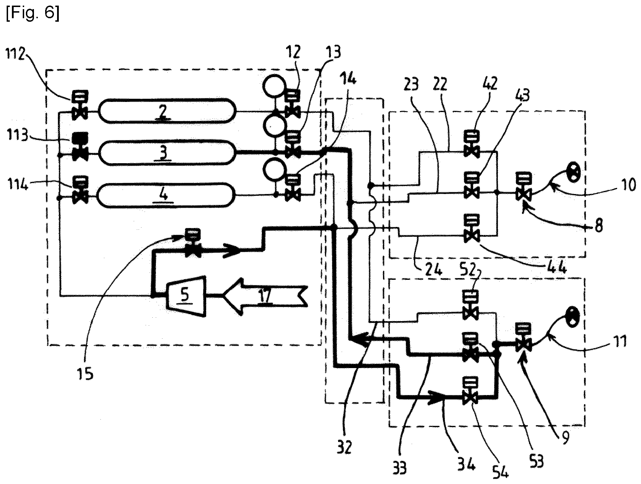

Si la seconde vanne de sortie 113 d'un stockage 3 tampon est en panne (représentée en noir), le remplissage dudit stockage 3 par le compresseur 5 peut être réalisé soit directement par la première sortie de fluide concernée (ouverture de la première vanne de sortie 13 correspondante), soit, et comme illustré à la [Fig. 6], via un trajet indirect via deux conduites 34, 33 de transfert d'une autre terminaison 11. En variante, le trajet indirect pourrait utiliser deux conduites 34, 33 de transfert de la première terminaison 10 (ou une autre en cas de plus de deux terminaisons).

Les exemples décrits ci-dessus montrent qu'en fonction des vannes défaillantes il existe au moins un chemin alternatif afin d'effectuer la fonction envisagée en premier recours. Ces modes de fonctionnement alternatifs permettent de garder la station opérationnelle, même une vanne ou terminaison est momentanément hors service.

Ainsi, grâce à cette structure, même en cas de défaillance d'au moins une vanne, le disposition (station) reste disponible à sa capacité nominale. Notamment pour des remplissages en cascade à partir des stockages 2, 3, 4.

Dans ce qui précède on a désigné pour chaque stockage de fluide sous pression des première et seconde sorties. Bien entendu, le terme « sortie » ne doit pas être compris comme permettant uniquement le soutirage de fluide du stockage mais permet également son remplissage. De préférence cependant, en configuration normale, la première sortie 12, 13, 14 peut être préférée pour le soutirage du stockage tandis que la seconde sortie peut être préférée pour le remplissage du stockage.

## Revendications

1. Dispositif de remplissage de réservoirs de gaz sous pression, en particulier de réservoirs d'hydrogène de véhicules, comprenant un circuit de transfert de fluide comprenant une extrémité amont munie d'une pluralité de sources (2, 3, 4, 5) de fluide sous pression et une extrémité aval comprenant au moins deux terminaisons (10, 11) de distribution destinées chacune à être raccordées à des réservoirs (6, 7) distincts à remplir, chaque source (2, 3, 4, 5) comprenant une première sortie de fluide raccordée à une première vanne de sortie (12, 13, 14, 15) respective, chaque première vanne (12, 13, 14, 15) de sortie étant raccordée à chacune des au moins deux terminaisons (10, 11) de distribution via des conduites (22, 23, 24, 32, 33, 34) de transfert parallèles, chacune des conduites (22, 23, 24, 32, 33, 34) de transfert comprenant au moins un vanne (42, 43, 44, 52, 53, 54) d'isolation respective, chacune des terminaisons de distribution (10, 11) étant reliée fluidiquement à chaque première vanne (12, 13, 14, 15) de sortie d'une source (2, 3, 4, 5) via un premier chemin fluidique direct passant par une seule conduite de transfert (22, 23, 24, 32, 33, 34) et via au moins un second chemin fluidique alternatif indirect passant successivement par plusieurs conduites de transfert (22, 23, 24, 32, 33, 34), le dispositif comprenant un contrôleur (16) électronique comprenant un organe de stockage et de traitement de données, au moins une partie des vannes du circuit étant des vannes du type pilotées et reliées au contrôleur (16) électronique, le contrôleur (16) électronique étant configuré pour commander l'ouverture ou la fermeture desdites vannes, **caractérisé en ce que** le contrôleur (16) électronique est configuré pour assurer un transfert de fluide entre une des sources (2, 3, 4, 5) et une terminaison (10, 11) de distribution selon le premier chemin fluidique direct passant par une seule conduite de transfert (22, 23, 24, 32, 33, 34) ou selon le second chemin indirect passant successivement par plusieurs conduites de transfert (22, 23, 24, 32, 33, 34) selon un état de fonctionnement d'au moins une desdites vannes.

2. Dispositif selon la revendication 1, **caractérisé en ce que** la pluralité de source(s) de fluide sous pression comprend plusieurs stockages (2, 3, 4) de fluide sous pression.

3. Dispositif selon la revendication 2, **caractérisé en ce que** plusieurs desdits stockages (2, 3, 4) de fluide sous pression comprennent une deuxième sortie de fluide raccordée à une deuxième vanne de sortie (112, 113, 114) respective.

4. Dispositif selon la revendication 3, **caractérisé en ce que** chacune des deuxièmes vannes de sortie (112, 113, 114) des stockages (2, 3, 4) de fluide est reliée aux terminaisons (10, 11) de distribution via les conduites (22, 23, 24, 32, 33, 34) de transfert.

5. Dispositif selon l'une quelconque des revendications 1 à 4, **caractérisé en ce que** la pluralité de source(s) (2, 3, 4, 5) de fluide sous pression comprend au moins un compresseur (5).

6. Dispositif selon la revendication 5 prise en combinaison avec la revendication 3 ou 4, **caractérisé en ce que** la sortie du compresseur (5) est raccordée en parallèle aux deuxièmes sorties de fluide des stockages (2, 3, 4) de fluide et également aux conduites (22, 23, 24, 32, 33, 34) de transfert.

7. Dispositif selon l'une quelconque des revendications 1 à 6, **caractérisé en ce que** chaque terminaison (10, 11) de distribution comprend une vanne (8, 9) d'isolation située en aval des conduites (22, 23, 24, 32, 33, 34) de transfert.

8. Procédé de remplissage d'un réservoir utilisant un dispositif de remplissage selon l'une quelconque des revendications 1 à 7, **caractérisé en ce qu'**il comporte une étape de détection d'une défaillance de vanne du circuit et une étape de transfert de fluide via un chemin alternatif du circuit qui évite ladite vanne défaillante.

9. Procédé selon la revendication 8, **caractérisé en ce que**, en cas de détection de défaillance d'une vanne (42, 43, 44, 52, 53, 54) d'isolation d'une première conduite de transfert (22, 23, 24, 32, 33, 34) raccordée à une première terminaison (10) de distribution, le procédé comporte une étape de transfert de fluide d'une source vers ladite première terminaison (10) de distribution en passant via un chemin alternatif indirect passant par des conduites de transfert (22, 23, 24, 32, 33, 34) raccordées à une autre terminaison (11) de distribution puis via une seconde conduite de transfert raccordée à la première terminaison (10) de distribution.

10. Procédé selon la revendication 8 ou 9, dans lequel les stockages (2, 3, 4) de gaz sous pression comprennent une deuxième sortie de fluide raccordée à une deuxième vanne de sortie (12, 13, 14, 15) respective, lesdites deuxièmes vannes de sortie (12, 13, 14, 15) des stockages (2, 3, 4) de fluide étant reliées aux terminaisons (10, 11) de distribution via les conduites (22, 23, 24, 32, 33, 34) de transfert parallèles, le procédé comprenant une étape de transfert de fluide sous pression d'un des stockages (2, 3, 4) de fluide sous pression vers une terminaison (11) de distribution, et en cas de détection de défaillance de la première vanne (12, 13, 14, 15) du stockage concerné, le procédé comporte une étape de transfert de fluide sous pression dudit stockages (2, 3, 4) de fluide vers la terminaison (11) de distribution via la deuxième sortie de fluide.

11. Procédé selon la revendication 10 dans lequel la pluralité de source(s) de fluide sous pression comprend au moins un compresseur (5) raccordée en parallèle aux deuxièmes sorties de fluide des stockages (2, 3, 4) de fluide et aux conduites (22, 23, 24, 32, 33, 34) de transfert, le procédé comprenant une étape de remplissage d'un stockages (2, 3, 4) de fluide par le compresseur (5), **caractérisé en ce que**, en cas de détection de défaillance de la première vanne (12, 13, 14, 15) de sortie dudit stockage, le procédé comprend une étape de remplissage dudit stockage via la deuxième sortie de fluide.

## Patentansprüche

1. Vorrichtung zum Füllen von Druckgastanks, insbesondere von Wasserstofftanks von Fahrzeugen, welche einen Fluidübertragungskreis umfasst, der ein stromaufwärtiges Ende umfasst, das mit mehreren Quellen (2, 3, 4, 5) von Druckfluid ausgestattet ist, und ein stromabwärtiges Ende, das mindestens zwei Verteilungsenden (10, 11) umfasst, die dazu bestimmt sind, jeweils an einen anderen zu füllenden Tank (6, 7) angeschlossen zu werden, wobei jede Quelle (2, 3, 4, 5) einen ersten Fluidauslass umfasst, der an ein jeweiliges erstes Auslassventil (12, 13, 14, 15) angeschlossen ist, wobei jedes erste Auslassventil (12, 13, 14, 15) über parallele Übertragungsleitungen (22, 23, 24, 32, 33, 34) an jedes der mindestens zwei Verteilungsenden (10, 11) angeschlossen ist, wobei jede der Übertragungsleitungen (22, 23, 24, 32, 33, 34) mindestens ein jeweiliges Absperrventil (42, 43, 44, 52, 53, 54) umfasst, wobei jedes der Verteilungsenden (10, 11) mit jedem ersten Auslassventil (12, 13, 14, 15) einer Quelle (2, 3, 4, 5) über einen direkten ersten Fluidweg, der über eine einzige Übertragungsleitung (22, 23, 24, 32, 33, 34) verläuft, und über mindestens einen indirekten alternativen zweiten Fluidweg, der nacheinander über mehrere Übertragungsleitungen (22, 23, 24, 32, 33, 34) verläuft, in Fluidverbindung steht, wobei die Vorrichtung eine elektronische Steuereinheit (16) umfasst, die ein Organ zur Speicherung und Verarbeitung von Daten umfasst, wobei wenigstens ein Teil der Ventile des Kreises Ventile vom gesteuerten Typ sind und mit der elektronischen Steuereinheit (16) verbunden sind, wobei die elektronische Steuereinheit (16) dafür ausgelegt ist, das Öffnen oder das Schließen dieser Ventile zu steuern, **dadurch gekennzeichnet, dass** die elektronische Steuereinheit (16) dafür ausgelegt ist, eine Übertragung von Fluid zwischen einer der Quellen (2, 3, 4, 5) und einem Verteilungsende (10, 11) je nach einem Betriebszustand mindestens eines dieser Ventile entlang des direkten ersten Fluidweges, der über eine einzige Übertragungsleitung (22, 23, 24, 32, 33, 34) verläuft, oder entlang des indirekten zweiten Fluidweges, der nacheinander über mehrere Übertragungsleitungen (22, 23, 24, 32, 33, 34) verläuft, sicherzustellen.

2. Vorrichtung nach Anspruch 1, **dadurch gekennzeichnet, dass** die mehreren Quellen von Druckfluid mehrere Druckfluidspeicher (2, 3, 4) umfassen.

3. Vorrichtung nach Anspruch 2, **dadurch gekennzeichnet, dass** mehrere der Druckfluidspeicher (2, 3, 4) einen zweiten Fluidauslass umfassen, der an ein jeweiliges zweites Auslassventil (112, 113, 114) angeschlossen ist.

4. Vorrichtung nach Anspruch 3, **dadurch gekennzeichnet, dass** jedes der zweiten Auslassventile (112, 113, 114) der Fluidspeicher (2, 3, 4) mit den Verteilungsenden (10, 11) über die Übertragungsleitungen (22, 23, 24, 32, 33, 34) verbunden ist.

5. Vorrichtung nach einem der Ansprüche 1 bis 4, **dadurch gekennzeichnet, dass** die mehreren Quellen von Druckfluid (2, 3, 4, 5) mindestens einen Kompressor (5) umfassen.

6. Vorrichtung nach Anspruch 5 in Kombination mit Anspruch 3 oder 4, **dadurch gekennzeichnet, dass** der Auslass des Kompressors (5) zu den zweiten Fluidauslässen der Fluidspeicher (2, 3, 4) und auch zu den Übertragungsleitungen (22, 23, 24, 32, 33, 34) parallelgeschaltet ist.

7. Vorrichtung nach einem der Ansprüche 1 bis 6, **dadurch gekennzeichnet, dass** jedes Verteilungsende (10, 11) ein Absperrventil (8, 9) umfasst, dass stromabwärts der Übertragungsleitungen (22, 23, 24, 32, 33, 34) angeordnet ist.

8. Verfahren zum Füllen eines Tanks unter Verwendung einer Füllvorrichtung nach einem der Ansprüche 1 bis 7, **dadurch gekennzeichnet, dass** es einen Schritt der Erkennung eines Ausfalls eines Ventils des Kreises und einen Schritt der Übertragung von Fluid über einen alternativen Weg des Kreises, welcher das ausgefallene Ventil umgeht, umfasst.

9. Verfahren nach Anspruch 8, **dadurch gekennzeichnet, dass** im Falle einer Erkennung eines Ausfalls eines Absperrventils (42, 43, 44, 52, 53, 54) einer an ein erstes Verteilungsende (10) angeschlossenen ersten Übertragungsleitung (22, 23, 24, 32, 33, 34) das Verfahren einen Schritt der Übertragung von Fluid von einer Quelle zu dem ersten Verteilungsende (10) über einen indirekten alternativen Weg, der über an ein anderes Verteilungsende (11) angeschlossene Übertragungsleitungen (22, 23, 24, 32, 33, 34) und danach über eine an das erste Verteilungsende (10) angeschlossene zweite Übertragungsleitung verläuft, umfasst.

10. Verfahren nach Anspruch 8 oder 9, wobei die Druckgasspeicher (2, 3, 4) einen zweiten Fluidauslass umfassen, der an ein jeweiliges zweites Auslassventil (12, 13, 14, 15) angeschlossen ist, wobei die zweiten Auslassventile (12, 13, 14, 15) der Fluidspeicher (2, 3, 4) mit den Verteilungsenden (10, 11) über die parallelen Übertragungsleitungen (22, 23, 24, 32, 33, 34) verbunden sind, wobei das Verfahren einen Schritt der Übertragung von Druckfluid von einem der Druckfluidspeicher (2, 3, 4) zu einem Verteilungsende (11) umfasst und im Fall einer Erkennung eines Ausfalls des ersten Ventils (12, 13, 14, 15) des betreffenden Speichers das Verfahren einen Schritt der Übertragung von Druckfluid von dem Fluidspeicher (2, 3, 4) zu dem Verteilungsende (11) über den zweiten Fluidauslass umfasst.

11. Verfahren nach Anspruch 10, wobei die mehreren Quellen von Druckfluid mindestens einen Kompressor (5) umfassen, der zu den zweiten Fluidauslässen der Fluidspeicher (2, 3, 4) und zu den Übertragungsleitungen (22, 23, 24, 32, 33, 34) parallelgeschaltet ist, wobei das Verfahren einen Schritt des Füllens eines Fluidspeichers (2, 3, 4) durch den Kompressor (5) umfasst, **dadurch gekennzeichnet, dass** im Fall einer Erkennung eines Ausfalls des ersten Auslassventils (12, 13, 14, 15) dieses Speichers das Verfahren einen Schritt des Füllens dieses Speichers über den zweiten Fluidauslass umfasst.

## Claims

1. Device for filling pressurized gas tanks, in particular hydrogen tanks for vehicles, comprising a fluid transfer circuit comprising an upstream end provided with a plurality of pressurized fluid sources (2, 3, 4, 5) and a downstream end comprising at least two distribution terminals (10, 11) each intended to be connected to separate tanks (6, 7) to be filled, each source (2, 3, 4, 5) comprising a first fluid outlet connected to a first respective outlet valve (12, 13, 14, 15), each first outlet valve (12, 13, 14, 15) being connected to each of the at least two distribution terminals (10, 11) via parallel transfer ducts (22, 23, 24, 32, 33, 34), each of the transfer ducts (22, 23, 24, 32, 33, 34) comprising at least one respective isolation valve (42, 43, 44, 52, 53, 54), each of the distribution terminals (10, 11) being fluidly connected to each first outlet valve (12, 13, 14, 15) of a source (2, 3, 4, 5) via a first direct fluid path passing through a single transfer duct (22, 23, 24, 32, 33, 34) and via at least one second indirect alternative fluid path successively passing through a plurality of transfer ducts (22, 23, 24, 32, 33, 34), the device comprising an electronic controller (16) comprising a data storage and processing component, with at least some of the valves of the circuit being valves of the controlled type and connected to the electronic controller (16), the electronic controller (16) being configured to control the opening or the closing of said valves, **characterized in that** the electronic controller (16) is configured to ensure a transfer of fluid between one of the sources (2, 3, 4, 5) and a distribution terminal (10, 11) along the first direct fluid path passing through a single transfer duct (22, 23, 24, 32, 33, 34) or along the second indirect path successively passing through a plurality of transfer ducts (22, 23, 24, 32, 33, 34) according to an operating state of at least one of said valves.

2. Device according to Claim 1, **characterized in that** the plurality of pressurized fluid sources comprises a plurality of pressurized fluid containers (2, 3, 4).

3. Device according to Claim 2, **characterized in that** several of said pressurized fluid containers (2, 3, 4) comprise a second fluid outlet connected to a second respective outlet valve (112, 113, 114).

4. Device according to Claim 3, **characterized in that** each of the second outlet valves (112, 113, 114) of the fluid containers (2, 3, 4) is connected to the distribution terminals (10, 11) via the transfer ducts (22, 23, 24, 32, 33, 34).

5. Device according to any one of Claims 1 to 4, **characterized in that** the plurality of pressurized fluid sources (2, 3, 4, 5) comprises at least one compressor (5) .

6. Device according to Claim 5 in combination with Claim 3 or 4, **characterized in that** the outlet of the compressor (5) is connected parallel to the second fluid outlets of the fluid containers (2, 3, 4) and also to the transfer ducts (22, 23, 24, 32, 33, 34).

7. Device according to any one of Claims 1 to 6, **characterized in that** each distribution terminal (10, 11) comprises an isolation valve (8, 9) located downstream of the transfer ducts (22, 23, 24, 32, 33, 34).

8. Method for filling a tank using a filling device according to any one of Claims 1 to 7, **characterized in that** it comprises a step of detecting a faulty valve in the circuit and a step of transferring fluid via an alternative path of the circuit that avoids said faulty valve.

9. Method according to Claim 8, **characterized in that**, in the event of the detection of a fault in an isolation valve (42, 43, 44, 52, 53, 54) of a first transfer duct (22, 23, 24, 32, 33, 34) connected to a first distribution terminal (10), the method comprises a step of transferring fluid from a source to said first distribution terminal (10), passing via an indirect alternative path passing through transfer ducts (22, 23, 24, 32, 33, 34) connected to another distribution terminal (11), then via a second transfer duct connected to the first distribution terminal (10).

10. Method according to Claim 8 or 9, wherein the pressurized gas containers (2, 3, 4) comprise a second fluid outlet connected to a second respective outlet valve (12, 13, 14, 15), said second outlet valves (12, 13, 14, 15) of the fluid containers (2, 3, 4) being connected to the distribution terminals (10, 11) via the parallel transfer ducts (22, 23, 24, 32, 33, 34), the method comprising a step of transferring pressurized fluid from one of the pressurized fluid containers (2, 3, 4) to a distribution terminal (11), and in the event of the detection of a fault in the first valve (12, 13, 14, 15) of the relevant container, the method comprises a step of transferring pressurized fluid from said fluid containers (2, 3, 4) to the distribution terminal (11) via the second fluid outlet.

11. Method according to Claim 10, wherein the plurality of pressurized fluid sources comprises at least one compressor (5) connected parallel to the second fluid outlets of the fluid containers (2, 3, 4) and to the transfer ducts (22, 23, 24, 32, 33, 34), the method comprising a step of one of the fluid containers (2, 3, 4) being filled by the compressor (5), **characterized in that**, in the event of the detection of a fault in the first outlet valve (12, 13, 14, 15) of said container, the method comprises a step of filling said container via the second fluid outlet.
